# EUROPEAN PATENT APPLICATION

(11) **EP 2 034 353 A1**
(43) Date of publication of application: **11.03.2009**
(21) Application number: 08252886.0
(22) Date of filing: 29.08.2008
(51) Int. Cl.: G02B 27/01

(54) **Head-up display system for vehicle**

(30) Priority: 05.09.2007 JP 2007230543
(71) Applicant: Calsonic Kansei Corporation, Tokyo 164-8602 (JP)
(72) Inventor: Ishii, Mikiko, Tokyo 164-8602 (JP); Yoshitomi, Teruo, Tokyo 164-8602 (JP)
(74) Representative: Oxley, Robin John George

(57) **Abstract**

A Head-up display system includes a display (11) for projecting a light to provide a display image, and a reflecting means (2) located in the proximity of a front windshield glass (7) of the vehicle. The reflecting means (2) has a reflection surface (21) for receiving the light projected from the display (11) to reflect toward a driver so that the driver can see the light reflected by the reflecting means (2) as a virtual display image (20) in a vehicle-front of the vehicle. The reflection surface (21) forms a background of the virtual display image (20), being set to have a color darker than a color of the display.

## Description

The present invention relates to a head-up display system of a vehicle for presenting visual information without obstructing a user's view.

A conventional head-up display system is disclosed in Japanese Patent Application Laid-Open Publication N0. 2005 - 35406. This head-up display system is installed on a motor vehicle, and a light for providing information is projected from a display contained in an instrument panel to a front windshield glass to be reflected toward eyes of a driver. Then the driver can see its virtual display image, which is overlapped with a background obtained by the outside light passing through the front windshield glass, at a vehicle-front side thereof. Instead of using the front windshield glass as a reflection member, in some of the conventional head-up display systems use a combiner, with a transparent part for reflecting the light outputted from the display, fixed on a front windshield glass.

However, in the above known conventional head-up display systems, there is a problem in that the visibility thereof is deteriorated because the driver sees the virtual display image together with its background in a state where they are overlapped with each other, the background notably changing in its brightness, color tone and so forth due to outside light passing through a reflection portion of the front windshield glass, the combiner or others. In other words, the background is a foreground of the vehicle motor which runs at various speeds and on various roads. This often decreases a contrast between the virtual display image and the background.

Therefore, the present invention seeks to provide a head-up display system of a vehicle which overcomes the foregoing drawbacks and can produce a virtual display image with a high contrast between the virtual display image and its background, thereby providing a driver with a higher visibility.

According to a first aspect of the present invention there is provided a head-up display system for a vehicle including a display and a reflecting means. The display projects a light to provide a display image, and the reflecting means is located in the proximity of a front windshield glass of the vehicle. The reflecting means has a reflection surface for receiving the light projected from the display to reflect toward a driver so that the driver can see the light reflected by the reflecting means as a virtual display image in a vehicle-front of the vehicle. The reflection surface forms a background of the virtual display image, being set to have a color darker than a color of the display.

Therefore, the head-up display system of the present invention can produce a virtual display image with a high contrast between the virtual display image and its background, thereby providing a driver with a higher visibility.

Preferably, the reflection surface is set to be not over 25 in a lightness L* thereof, in a color space defined by the lightness L* in a white-black direction, a chromaticity a* in a green-red direction and a chromaticity b* in a blue-yellow direction.

The features and advantages of the present invention will become apparent as the description proceeds when taken in conjunction with the accompanying drawings, in which:
FIG. 1 is a schematic side diagram showing a head-up display system of a first embodiment according to the present invention;
FIG. 2 is a cross sectional side view illustrating a construction of a reflection plate used in the head-up display system shown in FIG. 1;
FIG. 3 is a view showing an example of a display state of the head-up display system of the first embodiment, seen from a driver's seat side;
FIG. 4 is a schematic diagram explaining how to set a color of a reflection surface of a reflection plate used in a head-up display system of a second embodiment according to the present invention; and
FIG. 5 is a cross sectional side view showing a construction of the reflection plate used in the head-up display system of the second embodiment.

Throughout the following detailed description, similar reference characters and numbers refer to similar elements in all figures of the drawings, and their descriptions are omitted for eliminating duplication.

Preferred embodiments of the present invention will be described with reference to the accompanying drawings.

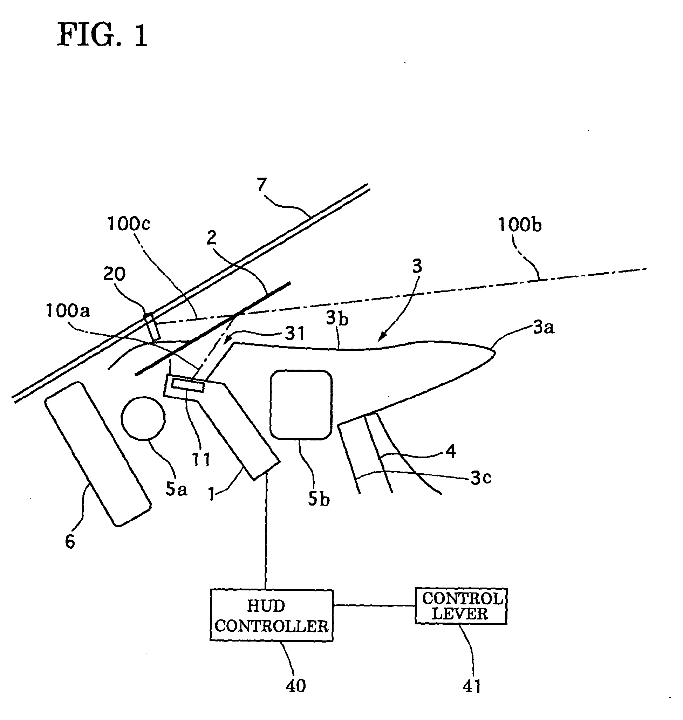

FIG. 1 shows a first preferred embodiment of a head-up display system according to the present invention.

The head-up display system is mounted on a motor vehicle and includes a head-up display (HUD) unit 1, a reflection plate 2, and a HUD controller 40. The reflection plate 2 corresponds to a reflecting means of the present invention.

The HUD unit 1 is installed inside an instrument panel 3, between a vehicle-rearward (a driver's side) projecting portion 3a of the instrument panel 3 and a partition wall (a dash board) 6, which defines an engine room and a passenger compartment. Specifically, it is located at a vehicle-front side of an indicator 4, which is attached to a depressed portion 3b of the instrument panel 3, and between two ducts 5a and 5b located inside the instrument panel 3.

The HUD unit 1 is equipped with a display 11 for projecting a light to the reflection plate 2 so as to provide a display image. The light produces the display image by adjusting its brightness according to information. The display 11 employs a liquid crystal display (LCD) with a backup light, for example. The HUD unit 1 is electrically connected to and is controlled by the HUD controller 40.

The HUD controller 40 is electrically connected to an operation lever 41 on the instrument panel 3, and controls the HUD unit 1 based on various signals outputted from sensors and other controllers. The operation lever 41 is used for adjusting a display position of the display 11, consequently changing a direction of a light path to an eye-point of a driver. This adjustment will be later described.

The instrument panel 3 is provided on its top portion 3c with an opening 31, which communicates an inner space and an outer side of the instrument panel 3, at a front-windshield-glass side in the passenger compartment, in order to maintain a first light path 100a so that the light emitted from the display 11 inside the instrument panel 3 can travel to the reflection plate 2 located over the top portion 3c thereof.

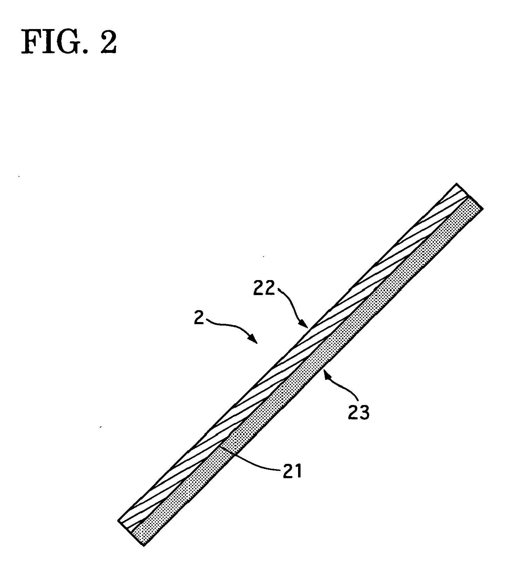

The reflection plate 2 is installed in the passenger room at a vehicle-rear side of a front windshield glass 7, and projects from the top portion 3c of the instrument panel 3, being also apart from the front windshield glass 7 and slanted so that its height becomes larger toward the driver. The reflection plate 2 is designed to have dimensions and a position where driver's vision through the front windshield glass 7 is not substantially obscured when he or she is driving the motor vehicle, since the reflection plate 2 substantially does not pass light therethrough, unlike a conventional half mirror, prevents the driver from seeing a foreground. The reflection plate 2 has a reflection surface 21, as shown in FIG. 2, to reflect the light from the display 11 toward the driver along a second light path 100b. This reflection surface 21 has an area with allowances in longitudinal and lateral directions thereof relative to an area for reflecting the light.

The display 11 is also designed to have a display area with allowances in both lateral and longitudinal directions thereof so that its virtual display image 20 can be moved to change reflecting areas on the reflecting surface 21 in order to adjust a direction of the first and second light paths 100a and 100b. This adjustment is executed by the driver by operating the operation lever 41 when the driver sits on a driver's seat. Operating the operation lever 41 causes a display image to electrically move on a display screen of the display 11, accordingly changing positions of the first light path 100a. Incidentally, the operation lever 41 may employ an operator for operating other functions.

Incidentally, the display image on the display 11 and the virtual display image 20 have the same color, although their brightness being slightly/very slightly different from each other.

As shown in FIG. 2, the reflection plate 2 consists of a black plate 22 and a transparent plate 23, where the black plate 22 is positioned at the vehicle-front side of the motor vehicle and the transparent plate 23 is positioned at the vehicle-rear side thereof, and they are fixed on each other. The black plate 22 has the reflection surface 21 at its rear side.

The reflection surface 21 of the reflection plate 2 is constructed to have a color and a brightness that enhance a contrast between the virtual display image 20 and its background, relative to those of a virtual display image 20 to be displayed by the light projected from the display 11.

Specifically, in the first embodiment, the reflection surface 21 is black and is set to have the light transmittance of approximately 0% and the light reflectance of less 10%, while a color of the light projected from the display 11 is set to be bright, close to white. Accordingly, the virtual display image 20 is close to white, and its background is black.

The operation and advantages of the head-up display system of the first embodiment will be described.

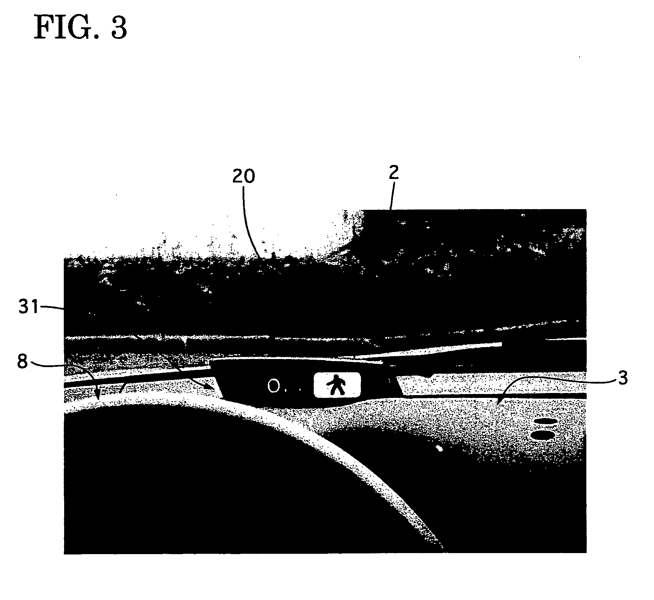

In the first embodiment, the HUD controller 40 controls the display 11 of the HUD unit 1 to produce the display image having the information such as a vehicle speed at a pre-adjusted position on the display 11 and project the light toward the reflection plate 2 along the first light path 100a through the opening 31 of the instrument panel 3 as shown in FIG. 3. Note that the first light path 100a changes according to the pre-adjusted position of the display image on the display 11 and is changeable according to the operation of the operation lever 41 to obtain an optimum direction and a travel direction of the light to the eye-point of the driver.

The projected light is reflected on the reflection surface 21 of the reflection plate 2 to travel toward the eyes of the driver along the second light path 100b. This produces the virtual display image 20 that the driver can see at a position in vehicle-front of the reflection plate 2, on an imaginary third light path 100c which is obtained by forward extending the second light path 100b. The driver can see the virtual display image 20 to understand its information without deeply inclining his or her visual axis downward.

At the same, the driver sees the black background of the virtual display image 20 on the reflection surface 21, because the black plate 22 of the reflection plate 2 has the light transmittance of approximately 0% and the light reflectance of not over 10%. This provides a higher contrast between the virtual display image 20 and the background, relative to that of conventional head-up display systems using a half mirror, because the half mirror has the light transmittance of not less 70% and the light reflectance of less 20-25%.

Some of the conventional head-up display systems with the half mirror having such a light transmittance and a light reflectance have a background brightness of 10,000cd/m² (candela/ square meter) and a display brightness of 5,000cd/m², which can obtain a brightness contrast of 1.5 (= (10,000 + 5,000) / 10,000). On the other hand, in the first embodiment, using the black background enables the display brightness to be decreased, consequently the background brightness is 50cd/m² and the display brightness is 300cd/m², and accordingly its bright contrast is 7 (= (50 + 300) / 50). This brightness contrast in the first embodiment is remarkably higher than those of the conventional head-up display systems.

In addition to the brightness contrast, the head-up display system of the first embodiment can obtain a color contrast between the virtual display image 20 and the background to further improve visibility of the driver.

These higher contrasts in the first embodiment can provide the driver with a sufficient visibility even when the outside light is weak or strong, while the visibility of the conventional head-up display systems often deteriorates significantly. Therefore, the head-up display system of the first embodiment can decrease electric power consumption of a light emitting source of the HUD unit 1 due to the high bright and color contrasts thereof, thus the HUD unit 1 being constructable in a smaller size and at a low manufacturing cost.

FIG. 3 shows an example of a display state of the head-up display system of the first embodiment, which demonstrates that the virtual display image 20 can be clearly seen above and in front of a steering wheel 8 without deterioration in a field of front vision by the reflection plate 2.

The outside light may often hit the reflection plate 2 and its circumference, which may reflect the light toward the opening 31 of the instrument panel 3 and an interior of the HUD unit 1. In this case, since the reflection surface 21 is set to have the light reflectance of not over 10%, the driver and a passenger can hardly see them. Note that the driver sees the virtual display image 20 in the black background at the vehicle-front side of the reflection plate 2.

The display 11 has a display area with the longitudinal and lateral allowances to allow the display image to move thereon and the reflection surface 21 also has an area with the longitudinal and lateral allowances relative to the area to be projected by the light from the display 11, so that a display position of the virtual display image 20 can be adjusted to move on the reflection surface 21 according to an eye-point of the driver, namely a position where the driver sees. It is also adjustable in order to avoid a partial lack of the vertical display image 20 due to existence of the steering wheel 8 and others located between the driver and the reflection plate 2. Note that the allowances of the reflection surface 21 can be set smaller in area because of the position adjustment of the display 11, thus improving its visual quality when it displays and suppressing an uncomfortable feeling of the driver in spite of existence of the reflection plate 2 that does not light when it does not display. In addition, the black color enhances the brightness and color contrasts when the virtual display image 20 is provided, and suppresses its existence when the image 20 is not displayed.

The reflection plate 2 consists of the black plate 22 and the transparent plate 23 fixed on the vehicle-rear side of the black plate 22, which can improve the visual quality due to an appropriate glaze on the reflection surface 21 when the HUD unit 1 is not activated.

The reflection plate 2 is separated from the front windshield glass 7, unlike an enlarged partial portion of masking part of the front windshield glass 7 used in the conventional head-up display system, which is disclosed in the above-described Japanese patent application. Therefore, it is not restricted in dimensions to laws and regulations on road motor vehicles, such as technical standard on windshield glass in Japanese safety standards. In addition, the reflection plate 2 can be positioned at the vehicle-rear side, which can avoid harmful effects, especially on the partition wall 6 and the like.

Next a head-up display system of a second embodiment according to the present invention will be described.

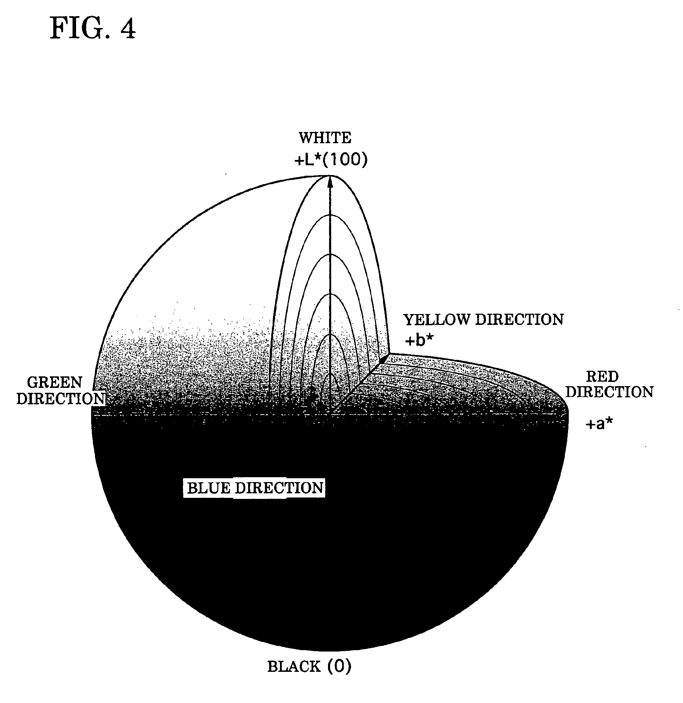

A reflection plate 2 in the second embodiment is set to have a lightness "L" of not over 25, where the lightness "L" is indicated in a white-black direction, a chromaticity "a" is indicated in a green-red direction and a chromaticity "b" is indicated in a blue-yellow direction as shown in FIG. 4.

FIG. 4 shows how to set a color of a reflection surface of the reflection plate 2, and the setting of colors, shown in FIG. 4, is called as an L*a* b* color coordinate system, where three axes of an L* axis extending in the white-black direction, an a* axis extending in the green-red direction and a b* axis extending in the blue-yellow direction are set similarly to an x-y-z coordinate system.

The lightness values "L*" varies from zero to 100, where L* zero indicates the most black, L* 100 indicates the most white, and at L: 50 the L* axis is orthogonal to the a* axis and the b* axis.

The a* axis has a median value at zero, where the a* axis is orthogonal to the b* axis and the L* axis. The color on the a* axis approaches red as its positive value becomes larger, while it approaches green as its negative value becomes smaller.

The b* axis has a median value at zero, where the b* axis is orthogonal to the a* axis and the L* axis. The color on the b-axis approaches yellow as its positive value becomes larger, while it approaches blue as its negative value becomes smaller.

The reflection surface 21 of the reflection plate 25 is set to have an L* value equal to or smaller than 25 in the L* axis in L*a*b* color space, and a display color of a light projected from a display 11 is set to have the L* value as high as possible, more than 25.

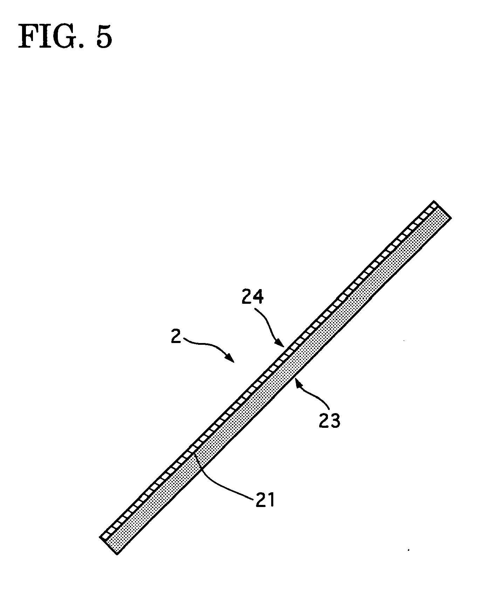

A construction of the reflection plate 2 is shown in FIG. 5. It has a transparent plate 23 a vehicle front side of which is painted in black to form a close black coating layer 24.

The other parts of the second embodiment are constructed similarly to those of the first embodiment shown in FIG. 1.

The operation of the head-up display system of the second embodiment will be described.

In the second embodiment, the lightness of the reflection surface 21 is set based on the L* value on the L* axis indicating the white-black direction to have the L* value equal or smaller than 25. In the L* value of not over 25, the color of the reflection surface 21 becomes very close to black, whatever values are set in the a* value and the b* value. This can provide a driver with a high contrast between a virtual display image 20 and a background, thus providing a high visibility, when a display image produced by the display 11 is set to have a bright color. The close black coating layer 24 of the reflection plate 2 provides good visual quality, since the reflection plate 2 easy melts unobtrusively into the instrument panel 3 due to close black when the HUD unit 1 does not work.

In the second embodiment, the reflection plate 2 can be manufactured at a low cost because of the close black coating layer 24. The transparent plate 23 provides glazing on the reflection surface 21, improving visual quality of the reflection plate 2. It is easy to manufacture the close black coating layer 24 with the approximate light transmission, for example not over 10%.

While there have been particularly shown and described with reference to preferred embodiments thereof, it will be understood that various modifications may be made therein, and it is intended to cover in the appended claims all such modifications as fall within the true spirit and scope of the invention.

The reflection plate 2 may be constructed by using only a black plate, a black plate provided at its vehicle-rear side (a driver's side) with a transparent plate, a transparent plate with the close black/black coating on its rear surface, or a transparent plate with a close-black/black painting (evaporation and so forth) on its front side (a front windshield glass side).

The head-up display system of the present invention may be applied to vehicles such as air planes and water vehicles.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A head-up display system for a vehicle comprising:
a display (11) for projecting a light to provide a display image; and
a reflecting means (2) having a reflection surface (21) for receiving the light projected from the display (11) to reflect toward a driver so that the driver can see the light reflected by the reflecting means (2) as a virtual display image (20) in a vehicle-front of the vehicle, the reflecting means (2) **characterized in that**
the reflecting means (2) is located in the proximity of a front windshield glass (7) of the vehicle and the reflection surface (21) forms a background of the virtual display image (20), being set to have a color darker than a color of the display.

2. The head-up display system according to claim 1, wherein
the reflecting means (2) is apart from the front windshield glass (7) in a vehicle rear side thereof.

3. The head-up display system according to claim 1 or claim 2, wherein
the reflection surface (21) is set to be not over 25 in a lightness L* thereof, in a color space defined by the lightness L* in a whit-black direction, a chromaticity a* in a green-red direction and a chromaticity b* in a blue-yellow direction.

4. The head-up display system according to any one of claims 1 to 3, wherein
the reflection surface (21) is set to have a light transmission of 0% and a reflectance of not over 10%.

5. The head-up display system according to any one of claims 1 to 4, wherein
the display (11) is adjustably changeable of positions of the display image in a longitudinal direction and a lateral direction according to an eye-point of the driver.
